# EUROPÄISCHE PATENTSCHRIFT

(11) **EP 3 430 250 B1**
(45) Veröffentlichungstag und Bekanntmachung des Hinweises auf die Patenterteilung: **28.04.2021**
(21) Anmeldenummer: 17710214.2
(22) Anmeldetag: 09.03.2017
(51) Int. Cl.: F02B 37/18, F02B 37/12, F16F 1/32

(54) **FEDERELEMENT FÜR EINE WASTEGATE-KLAPPE EINES TURBOLADERS UND VENTILVORRICHTUNG FÜR EINEN TURBOLADER**
SPRING ELEMENT FOR A WASTEGATE VALVE OF A TURBOCHARGER AND VALVE DEVICE FOR A TURBOCHARGER
DISPOSITIF DE RESSORT POUR UN VOLET WASTEGATE ET DISPOSITIF DE SOUPAPE POUR UN TURBOCHARGEUR

(30) Priorität: 16.03.2016 DE 102016104840
(43) Veröffentlichungstag der Anmeldung: 23.01.2019
(73) Patentinhaber: ElringKlinger AG, 72581 Dettingen (DE)
(72) Erfinder: HOFFMANN, Maximilian, 82547 Eurasburg (DE)
(74) Vertreter: Hoeger, Stellrecht & Partner Patentanwälte mbB
(86) Internationale Anmeldenummer: PCT/EP2017/055612
(87) Internationale Veröffentlichungsnummer: WO 2017/157769

(56) Entgegenhaltungen:
- DE-A1-102011 077 626
- DE-A1-102012 101 322
- US-A1- 2004 144 614
- US-A1- 2014 131 931
- US-A1- 2015 076 756

## Beschreibung

Die Erfindung betrifft ein Federelement für eine Wastegate-Klappe eines Turboladers, welches tellerartig gestaltet und aus einem Metallblech hergestellt ist sowie eine zentrale Öffnung mit einer Achse aufweist, wobei das Federelement bezüglich der Achse seiner Öffnung und in Richtung dieser Achse gesehen einen kreisförmigen Außenrand, einen radial äußeren Ringbereich, einen an die Federelement-Öffnung angrenzenden radial inneren Ringbereich sowie zwischen diesen einen solchen ringförmigen Übergangsbereich aufweist, dass der radial äußere Ringbereich gegenüber dem radial inneren Ringbereich in Richtung der Achse der Federelement-Öffnung versetzt ist, und wobei der äußere sowie der innere Ringbereich eben sind und in zur Achse der Federelement-Öffnung senkrechten Ebenen liegen und der Übergangsbereich von einer die Federelement-Öffnung umschließenden Halbsicke mit einem in den radial äußeren Ringbereich übergehenden radial äußeren Sickenfuß, einem in den radial inneren Ringbereich übergehenden radial inneren Sickenfuß und einer die beiden Sickenfüße miteinander verbindenden Sickenflanke gebildet wird.

Die Erfindung betrifft ferner eine Ventilvorrichtung für einen Abgas-Bypassfad eines Turboladers, welche aufweist ein tellerartiges Ventilelement, das eine in einer Ebene liegende Dichtfläche und einen sich von Letzterer weg erstreckenden Schaft aufweist sowie zwischen einer Schließstellung und einer Offenstellung bewegbar ist, einen Ventilelement-Träger, mit welchem das Ventilelement mittels seines Schafts verbunden, jedoch relativ zum Ventilelement-Träger in Richtung senkrecht zur Ventilelement-Dichtfläche begrenzt beweglich ist, eine Spindel, welche um eine Spindellängsachse drehbar gehalten sowie mit dem Ventilelement-Träger fest verbunden ist, so dass das Ventilelement durch Verdrehen der Spindel zwischen seiner Schließ- und seiner Offenstellung bewegbar ist, einen eine Abgas-Durchlassöffnung umschließenden Ventilsitz, gegen welchen die Ventilelement-Dichtfläche in der Schließstellung des Ventilelements mit einer Dichtpressung gasdicht anliegt, und ein Federelement der vorstehend definierten Art, wobei die Öffnung des Federelements vom Ventilelement-Schaft durchsetzt wird, durch den Ventilelement-Träger das Ventilelement derart gehalten ist, dass - in Richtung der Spindel-Längsachse gesehen - durch Verdrehen der Spindel die von der Ventilelement-Dichtfläche definierte Ebene um die Spindel-Längsachse um einen Schwenkwinkelbereich schwenkbar ist, dessen Bereichsgrenzen durch die Schließ- sowie die Offenstellung des Ventilelements definiert werden und welcher eine senkrecht zur Spindel-Längsachse sowie zur Ebene der Ventilelement-Dichtfläche verlaufende Schwenkwinkelebene definiert, in welcher die Längsachse des Ventilelement-Schafts liegt, und der radial äußere Ringbereich gegenüber dem radial inneren Ringbereich des Federelements in Richtung der Achse der Federelement-Öffnung derart versetzt ist, dass ein Spiel in Richtung der Längsachse des Ventilelement-Schafts zwischen dem Ventilelement und dem Ventilelement-Träger durch das Federelement zumindest nahezu beseitigt wird.

Schließlich betrifft die Erfindung auch die Verwendung eines vorstehend definierten Federelements in einer Ventilvorrichtung der vorstehend definierten Art eines Turbolader-Abgas-Bypasspfads.

Im Betrieb einer solchen Ventilvorrichtung wird durch Verdrehen der Spindel das Ventilelement von seiner Offen- in seine Schließstellung bzw. umgekehrt bewegt und dabei die Ventilelement-Dichtfläche um die Spindellängsachse geschwenkt (gekippt), und zwar um einen Schwenkwinkelbereich, dessen Grenzen durch die Offen- und die Schließstellung des Ventilelements bestimmt werden (der Schwenkwinkelbereich definiert dabei eine senkrecht zur Spindellängsachse sowie zur Ebene der Ventilelement-Dichtfläche verlaufende Schwenkwinkelebene, in welcher die Längsachse des Ventilelement-Schafts liegt). Das Federelement hat bezüglich der Achse seiner Öffnung und in Richtung dieser Achse gesehen einen radial äußeren und einen (an die Federelement-Öffnung angrenzenden) radial inneren Ringbereich sowie zwischen diesen einen solchen ringförmigen Übergangsbereich, dass der radial äußere Ringbereich gegenüber dem radial inneren Ringbereich in Richtung der Achse der Federelement-Öffnung versetzt ist, wodurch es ermöglicht wird, ein Spiel zwischen dem Ventilelement und dem Ventilelement-Träger (in Längsrichtung des Ventilelement-Schafts) durch das Federelement zumindest nahezu zu beseitigen.

Ein Federelement sowie eine Ventilvorrichtung der vorstehend definierten Art ergeben sich aus der DE 10 2012 101 322 A1 der ElringKlinger AG, und weitere Einzelheiten der Ventilvorrichtung sowie ihres Umfelds in einem Turbolader lassen sich diesem Dokument entnehmen.

Im Betrieb eines Turboladers muss sich dessen Abgas-Bypasspfad in jedem Betriebszustand und infolgedessen auch bei jeder Betriebstemperatur des Turboladers zuverlässig verschließen lassen, was nicht ganz unproblematisch ist, weil üblicherweise der für das Ventilelement vorgesehene Ventilsitz in eine großen Temperaturschwankungen ausgesetzte Innenwand des Turbinengehäuses eingesetzt ist und weil das von der Spindel vermittels des Ventilelement-Trägers gehaltene Ventilelement zwischen seiner Offen- und seiner Schließstellung eine Schwenkbewegung durchführt, so dass aufgrund der im Turboladerbetrieb auftretenden großen Temperaturschwankungen, aber auch aufgrund von unvermeidbaren Fertigungstoleranzen nicht davon ausgegangen werden kann, dass beim Schließen des Abgas-Bypasspfads die Ventilelement-Dichtfläche überall gleichzeitig gegen den Ventilsitz angelegt wird. Das vorstehend erwähnte Federelement wird auch dafür benötigt, dass sich die Ventilelement-Dichtfläche stets an die Dichtfläche des Ventilsitzes anpassen kann und in der Schließstellung des Ventilelements mit der für das Verschließen des Abgas-Bypasspfads erforderlichen Dichtpressung gegen den Ventilsitz angepresst wird; wegen des erforderlichen Anpassungsvermögens des Ventilelements wird dessen Schaft die Federelement-Öffnung im Allgemeinen mit einem gewissen Spiel durchsetzen.

Wie im Folgenden noch gezeigt werden wird, dürfen die vom eingebauten Federelement im Turboladerbetrieb auf das Ventilelement ausgeübten Kräfte nicht allzu groß sein, was dazu führen kann, dass im Turboladerbetrieb bei bestimmten Winkelstellungen des Ventilelements dieses durch den Abgasstrom zu schwingungsähnlichen Bewegungen angeregt wird, welche im Turboladerbetrieb zu Rassel- und Klappergeräuschen führen, die nicht nur wegen des Geräusches, sondern auch wegen durch das Klappern hervorgerufener Verschleißerscheinungen nachteilig sind.

Da zum Schließen des Abgas-Bypasspfads das Ventilelement mit seiner Dichtfläche überall abdichtend gegen den Ventilsitz angelegt werden muss (das heißt das Ventilelement muss sich an den Ventilsitz anpassen können), wofür es aus den vorstehend dargelegten Gründen in der Regel einer bereichsweise unterschiedlichen Verformung des Federelements bedarf, und da sich mit den auf dem Markt für das Verdrehen der Spindel zur Verfügung stehenden Stellsystemen nur begrenzte Kräfte bzw. Drehmomente ausüben lassen, darf das Federelement der Anpassung des Ventilelements an den Ventilsitz keine allzu großen Kräfte entgegensetzen. Andererseits soll das Federelement die vorstehend erwähnten schwingungsähnlichen Bewegungen des Ventilelements möglichst stark dämpfen und auch nach einer nicht unerheblichen Betriebszeit, das heißt einer gewissen Alterung, ein Spiel zwischen dem Ventilelement und dem Ventilelement-Träger möglichst vollständig beseitigen; dies sind Anforderungen an das Federelement, welche der Forderung nach einem möglichst geringen Kraftaufwand bei der Anpassung des Ventilelements an den Ventilsitz widersprechen. In diesem Zusammenhang ist Folgendes zu bemerken:

Aus der bereits vorstehend erwähnten DE 10 2012 101 322 A1 ergibt sich für eine Ventilvorrichtung der oben beschriebenen Art ein kreisringförmiges Metallblech-Federelement, welches zwischen einem radial äußeren und einem radial inneren jeweils kreisringförmigen Ringbereich als Übergangsbereich eine in der Draufsicht auf das Federelement gleichfalls kreisringförmige Halbsicke besitzt, deren Sickenhöhe gleich dem axialen Versatz des radial inneren Ringbereichs gegenüber dem radial äußeren Ringbereich ist. Bei diesem Federelement ist die axiale Steifigkeit oder Federhärte umso größer je größer die Sickenhöhe der Halbsicke ist, wobei wegen der hohen Betriebstemperaturen eines Turboladers im Bereich seiner Wastegate-Klappe das Höhenmaß des Federelements dessen Verformungsverhalten hauptsächlich während der ersten Verformungszyklen beeinflusst - unter einem Verformungszyklus ist dabei die Verformung des Federelements zu verstehen, wenn die Wastegate-Klappe von ihrer Offen- in ihre Schießstellung und wieder zurück in ihre Offenstellung bewegt wird. Meist ist jedoch der im Bereich der Wastegate-Klappe in einem Turbolader für das Federelement zur Verfügung stehende Bauraum eng begrenzt, und zwar sowohl in axialer als auch in radialer Richtung des Federelements.

Aufgabe der vorliegenden Erfindung war es, ein Federelement der eingangs definierten Art sowie eine ein solches Federelement aufweisende Ventilvorrichtung der eingangs definierten Art vorzuschlagen, welches bzw. welche es ermöglicht, zumindest einen Teil der Defizite des Standes der Technik zu vermeiden oder zumindest zu minimieren.

Für die Lösung dieser Aufgabe wird erfindungsgemäß vorgeschlagen, ein Federelement der eingangs definierten Art so zu gestalten, dass, in Richtung der Achse der Federelement-Öffnung gesehen, die Breite des Federelement-Übergangsbereichs und damit die Steifigkeit des Übergangsbereichs gegenüber in Richtung der Achse der Federelement-Öffnung orientierten Pressungskräften um die Federelement-Öffnung herum so variiert, dass der Übergangsbereich zwei einander bezüglich der Federelement-Öffnung gegenüberliegende erste Längsabschnitte größter mittlerer Breite und zwischen diesen beiden ersten Längsabschnitten zwei einander bezüglich der Federelement-Öffnung gleichfalls gegenüberliegende zweite Längsabschnitte kleinster mittlerer Breite aufweist, und dass die Sickenflanke in den ersten Längsabschnitten des Übergangsbereichs gegenüber der Achse der Federelement-Öffnung stärker geneigt ist als in den zweiten Längsabschnitten.

Anders als bei dem sich aus der DE 10 2012 101 322 A1 ergebenden Federelement mit einer kreisringförmigen Halbsicke, welche infolgedessen um die Federelement-Öffnung herum überall dieselbe radiale Breite und damit auch überall dieselbe axiale Steifigkeit oder Federhärte besitzt, zeichnet sich ein erfindungsgemäßes Federelement dadurch aus, dass seine Steifigkeit gegenüber in Richtung der Federelement-Achse orientierten Pressungskräften um die Federelement-Öffnung herum nicht überall konstant, sondern in den Bereichen der beiden ersten Längsabschnitte des Federelement-Übergangsbereichs kleiner als in den Bereichen der beiden zweiten Längsabschnitte ist. Wird ein erfindungsgemäßes Federelement in eine Ventilvorrichtung der eingangs definierten Art mit einer geeigneten Winkelposition auf dem Schaft des Ventilelements bzw. der Wastegate-Klappe eingebaut, lässt sich die Ventilelement-Dichtfläche beim Schwenken des Ventilelements in seine Schließstellung mit einem möglichst geringen Kraftaufwand an den Ventilsitz anpassen, und dennoch ist das Ventilelement über eine möglichst lange Betriebszeit zumindest gegen nennenswerte schwingungsähnliche Bewegungen geschützt.

Um für eine Ventilvorrichtung der eingangs definierten Art diese durch das erfindungsgemäße Federelement ermöglichten Vorteile auch während des Betriebs der Ventilvorrichtung zu sichern, wird eine solche Ventilvorrichtung erfindungsgemäß so gestaltet, dass das Federelement auf dem Ventilelement-Schaft relativ zum Ventilelement-Träger unverdrehbar gehalten ist und jeder erste Längsabschnitt des Übergangsbereichs des Federelements von der Schwenkwinkelebene durchquert wird und symmetrisch zu dieser angeordnet ist.

Ebenso wie die DE 10 2012 101 322 A1 betrifft auch die

DE 10 2011 077 626 A1 eine Ventilvorrichtung für einen Abgas-Bypasspfad eines Turboladers mit einer Wastegate-Klappe als Ventilelement und einer um eine Spindel-Längsachse verdrehbar gelagerten Spindel für die Betätigung des Ventilelements. Bei dieser bekannten Ventilvorrichtung ist ein dem Ventilelement benachbarter Endbereich der Spindel gegenüber der Spindel-Längsachse um 90° abgewinkelt und mit einem Ventilelement-Träger versehen, der auf dem Spindel-Endbereich begrenzt verdrehbar sowie begrenzt verschiebbar angeordnet und an dem das Ventilelement um eine zur Spindel-Längsachse parallele Achse begrenzt schwenkbar angebracht ist; zu diesem Zweck weist das Ventilelement an seiner von der Ventilelement-Dichtfläche abgekehrten Seite einen Schaft auf, welcher zur Realisierung der schwenkbaren Verbindung des Ventilelements mit dem Ventilelement-Träger mit einer Querbohrung versehen ist. Bei dieser bekannten Ventilvorrichtung ist auf den abgewinkelten Endbereich der Spindel eine rechteckige und mit einer zentralen rechteckigen Öffnung versehene Federscheibe aufgeschoben, um den Ventilelement-Träger gegenüber der Spindel in bezüglich der Spindel-Längsachse senkrechter Richtung vorzuspannen, wozu zwei einander gegenüberliegende Schenkel der Federscheibe jeweils mit einer sickenartige Auswölbung versehen sind; diese beiden Schenkel sind über zwei einander gleichfalls gegenüberliegende Schenkel geringerer Breite miteinander verbunden. Diese Federscheibe ist auf dem abgewinkelten Endbereich der Spindel derart angeordnet, dass die senkrecht zur Ebene der Ventilelement-Dichtfläche verlaufende Schwenkwinkelebene des Ventilelements dessen beide schmäleren Schenkel durchquert. Ergänzend ist noch darauf hinzuweisen, dass die Federscheibe bis auf ihre beiden sickenartigen Auswölbungen eben ist.

Aus der US 2015/0076756 A1 ist ein kegelstumpfförmiges Federelement mit einer zentralen Öffnung und einem Außenumfang bekannt, von welchem gefordert wird, dass er (in einer Draufsicht auf das Federelement) eine elliptische Form aufweist. Dieses Federelement ist zwischen seinem Außenumfang und dem Rand seiner Öffnung überall und damit insgesamt konisch gestaltet, und bei den in diesem Dokument offenbarten Formen für die zentrale Öffnung des Federelements hat der elliptische Außenumfang zur Folge, dass der das Federelement bildende kegelstumpfförmige Blechkörper in einer Draufsicht auf das Federelement eine um dessen Öffnung herum variierende radiale Breite aufweist.

Ziel der in diesem Dokument offenbarten Gestaltung des Federelements ist es, mehrere nebeneinander angeordnete konusförmige und in der Draufsicht kreisrunde Federelemente zu ersetzen durch ein einziges möglichst gleichwirkendes, jedoch ebenfalls konisches Federelement mit einem elliptischen Außenumfang.

Hinzuweisen ist außerdem darauf, dass die sich aus diesem Dokument ergebenden Federelemente beim Einbau zwischen einander benachbarten Bauteilen an diesen ausschließlich mit metallischen Kanten (am Außenrand und am Öffnungsrand des Federelements) anliegen, so dass bei Verwendung eines solchen Federelements unter hohen Temperaturen die vorstehend erwähnten Federelement-Kanten im Laufe der Betriebszeit zunehmend verformt werden und in den gegen das Federelement angepressten Bauteilflächen zunehmend zu Eingrabungen führen, so dass sich die Wirkung des Federelements im Laufe des Betriebs verändert.

Vorteilhaft ist es, wenn der ringförmige Übergangsbereich überall zumindest im Wesentlichen dieselbe Höhe (gemessen in Richtung der Achse der Federelement-Öffnung) aufweist.

Grundsätzlich muss die Federelement-Öffnung nicht unbedingt im Zentrum des ring- oder tellerförmigen Federelements liegen; vielmehr könnte diese Öffnung auch exzentrisch angeordnet sein, und die Öffnung könnte statt einer kreisrunden auch eine längliche, insbesondere ovale Form haben, auch um im Fall eines kreisförmigen Außenrands des Federelements dessen Übergangsbereich eine um die Öffnung herum variierende Breite zu verleihen.

Das Federelement ist insbesondere so gestaltet, dass - in Richtung der Achse der Federelement-Öffnung gesehen - die Öffnung eine längliche Form mit zwei bezüglich der Öffnungsachse einander gegenüberliegenden Längsendbereichen hat, welche in Umfangsrichtung der Federelement-Öffnung jeweils zwischen den beiden ersten Längsabschnitten des Übergangsbereichs angeordnet sind.

Wegen der für das Federelement meist beengten Einbauverhältnisse eines Turboladers weist das Federelement vorteilhafter Weise eine Halbsicke auf, deren Flanke vom Federelement-Übergangsbereich gebildet wird - in einem Querschnitt durch das Federelement besitzt die Halbsicke zwei Sickenfüße, welche durch die sogenannte Flanke der Sicke miteinander verbunden werden. In diesem Zusammenhang wird darauf hingewiesen, dass in einer Draufsicht auf das ringförmige Federelement eine Halbsicke weniger Platz benötigt als eine sogenannte Vollsicke (gemessen in bezüglich der Achse der Federelement-Öffnung radialer Richtung).

Weitere Merkmale, Einzelheiten und Vorteile der Erfindung ergeben sich aus den beigefügten Ansprüchen sowie aus den beigefügten Zeichnungen und/oder deren nachfolgender Beschreibung. In den Zeichnungen zeigen die Figuren 1 bis 6 und 6A Teile bekannter Turbolader, während in den Figuren 7 bis 11 bevorzugte Ausführungsformen der Erfindung dargestellt sind; in den Zeichnungsfiguren zeigen:

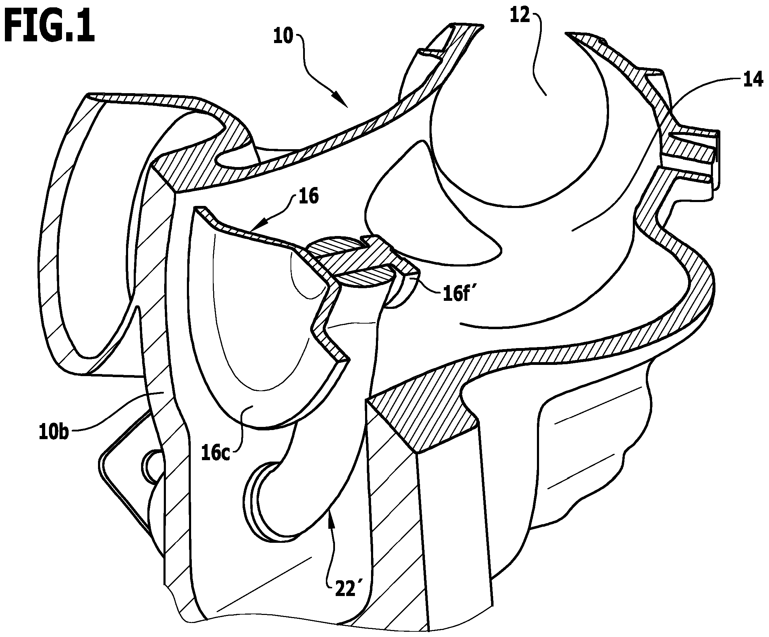

- Fig. 1:: einen aufgeschnittenen Teil eines Turbinengehäuses eines bekannten Turboladers mit einem als Wastegate-Klappe gestalteten Ventilelement samt Ventilelement-Träger in einer isometrischen Darstellung;

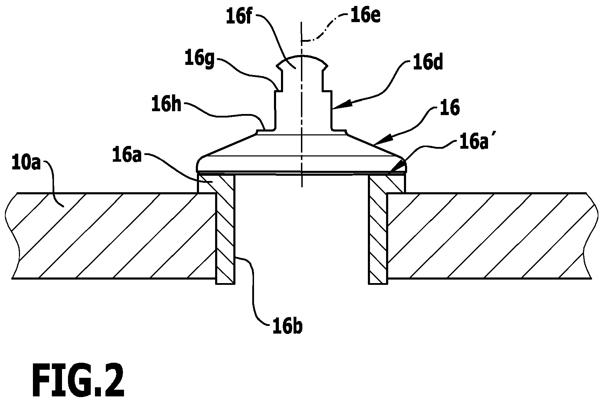

- Fig. 2:: das mit einem Schaft versehene Ventilelement in einer Seitenansicht und, in einer Schnittdarstellung, einen Teil einer Wand des Turbinengehäuses mit einem Ventilsitz für das Ventilelement;

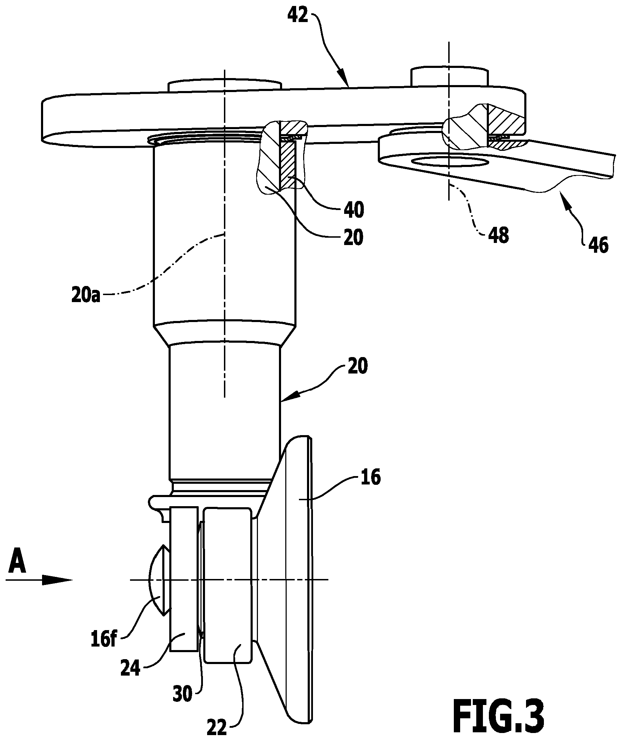

- Fig. 3:: eine teilweise aufgebrochene Seitenansicht einer Baugruppe, bestehend aus dem Ventilelement, dem Ventilelement-Träger, einer in einer Lagerbuchse verdrehbar gehaltenen und mit dem Ventilelement-Träger versehenen Spindel, einem an Letzterer befestigten Stellhebel und einem mit diesem gelenkig verbundenen Stellhebel-Betätigungselement;

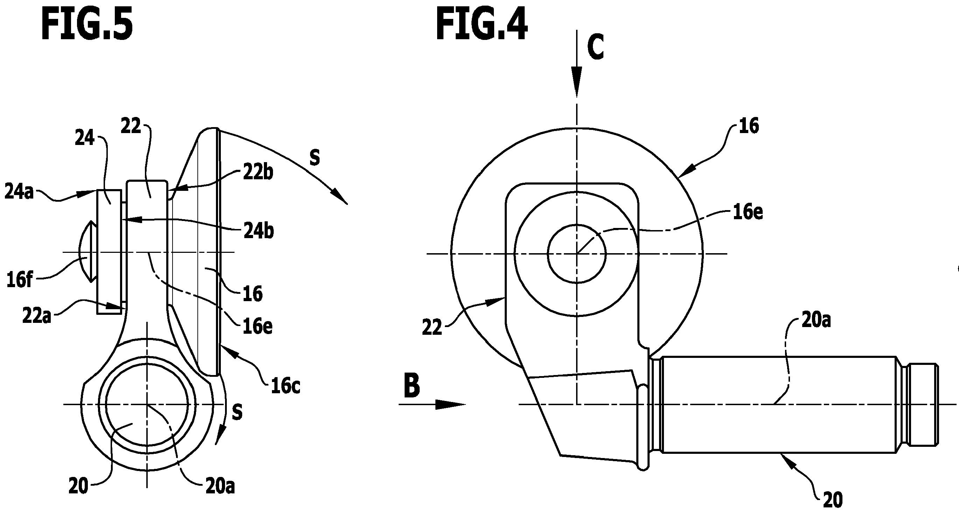

- Fig. 4:: eine Ansicht der Spindel, des Ventilelement-Trägers und des Ventilelements gesehen in Richtung des Pfeils A aus Fig. 3;
- Fig. 5:: eine Ansicht der in Fig. 4 dargestellten Teile gesehen in Richtung des Pfeils B aus Fig. 4;

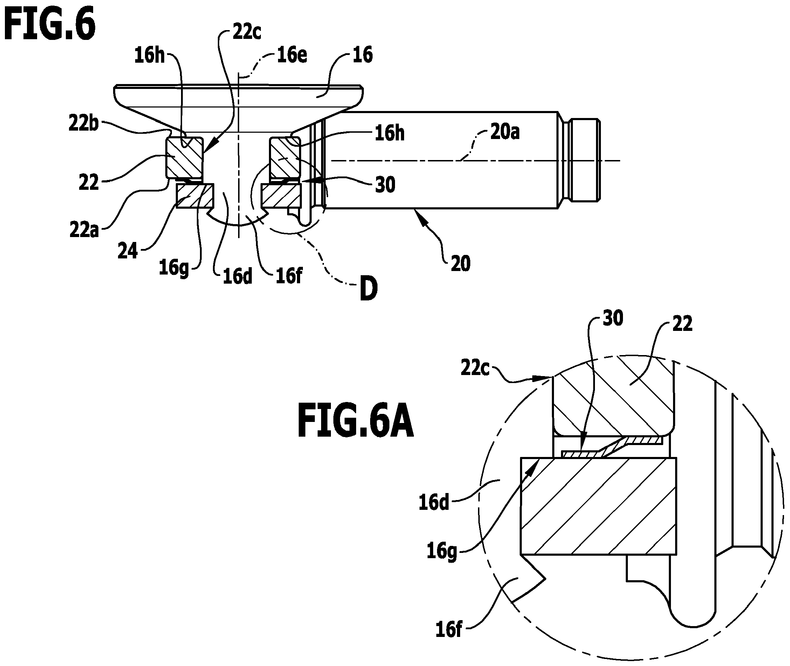

- Fig. 6:: eine Ansicht der in Fig. 4 dargestellten Teile gesehen in Richtung des Pfeils C aus Fig. 4, wobei jedoch ein Bereich des Ventilelement-Trägers und eine Unterlegscheibe im Schnitt dargestellt wurden;
- Fig. 6A:: den Ausschnitt D aus Fig. 6 in größerem Maßstab;

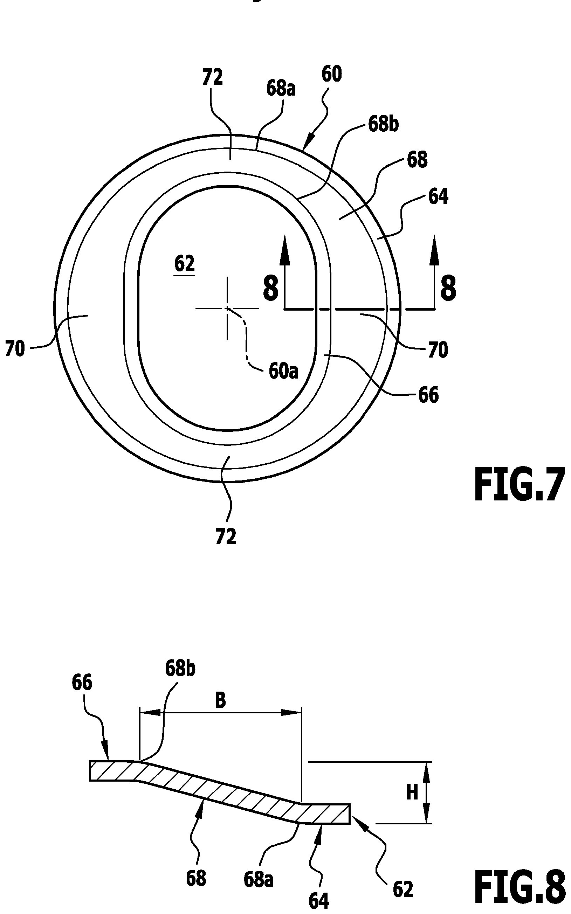

- Fig. 7:: eine Draufsicht auf eine bevorzugte Ausführungsform eines erfindungsgemäßen Federelements;
- Fig. 8:: einen Schnitt durch dieses Federelement nach der Linie 8-8 in Fig. 7;

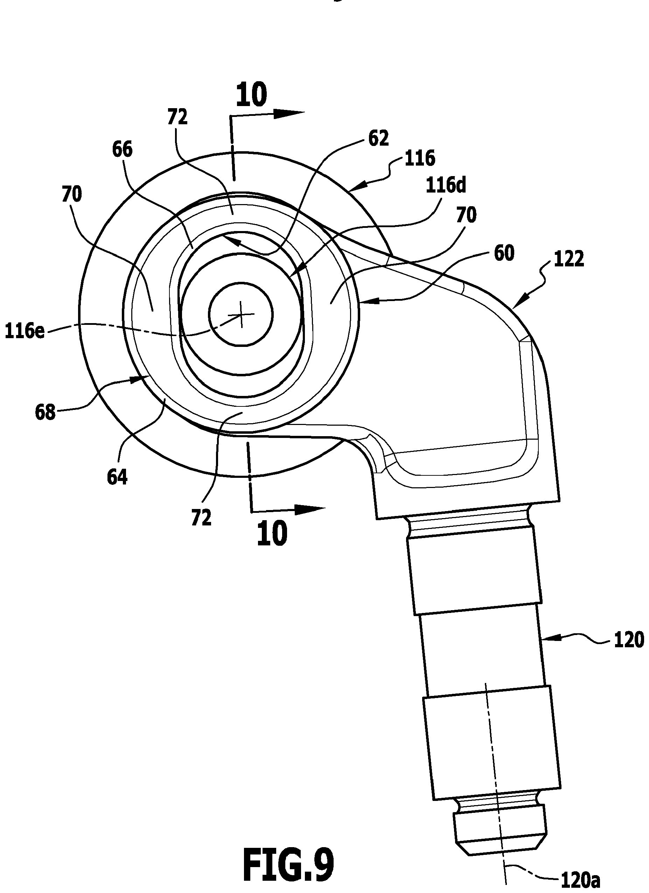

- Fig. 9:: eine der Fig. 4 ähnliche Ansicht einer Baugruppe einer bevorzugten Ausführungsform der erfindungsgemäßen Ventilvorrichtung, wobei diese Baugruppe umfasst die Spindel, den VentilelementTräger und das in Fig. 7 gezeigte erfindungsgemäße Federelement;

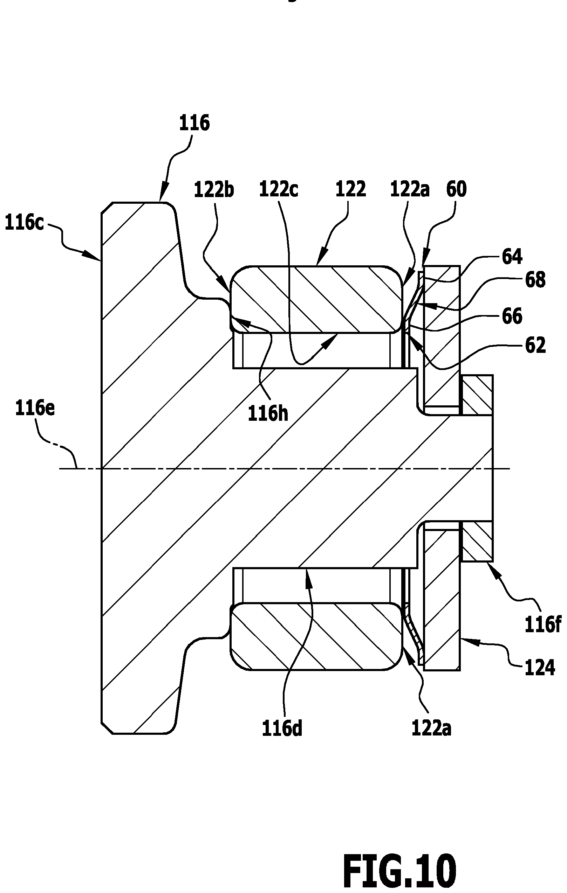

- Fig. 10:: einen Schnitt nach der Linie 10-10 in Fig. 9, und

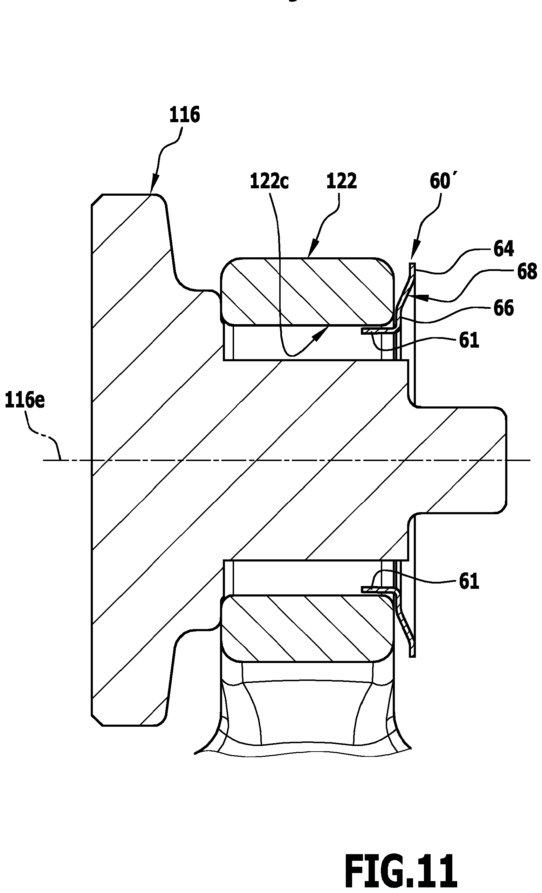

- Fig. 11:: eine der Fig. 10 entsprechende Schnittdarstellung durch eine zweite Ausführungsform der Baugruppe der erfindungsgemäßen Ventilvorrichtung, wobei die Fig. 11 auch eine weitere, besonders vorteilhafte Ausführungsform des erfindungsgemäßen Federelements darstellt sowie einen in Fig. 10 nicht gezeigten Bereich des Ventilelement-Trägers erkennen lässt.

Die Zeichnungsfiguren 1 bis 6 und 6A sind weitgehendst identisch mit den Figuren 1 bis 6 und 6A der DE 10 2012 101 322 A1 und lassen infolgedessen Merkmale der vorliegenden Erfindung nicht erkennen. Die beigefügten Figuren 1 bis 6 und 6A sowie deren nachfolgende Beschreibung erleichtern jedoch das Verständnis der vorliegenden Erfindung.

Die Fig. 1 zeigt einen Teil eines Turbinengehäuses 10, in welches der dem Antrieb einer nicht dargestellten Abgas-Turbolader-Turbine dienende Abgasstrom durch eine Abgas-Einlassöffnung 12 hindurch eintritt. An Letztere schließt sich ein im Turbinengehäuse 10 ausgebildeter Abgas-Anströmpfad 14 an, welcher zur Turbine führt und in dem ein bei dieser Ausführungsform als Wastegate-Klappe gestaltetes Ventilelement 16 angeordnet ist. Dieses in Fig. 1 nur teilweise dargestellte, tellerartig gestaltete Ventilelement 16 lässt sich im Abgas-Anströmpfad 14 in noch zu beschreibender Weise gegenüber dem Turbinengehäuse 10 bewegen, um eine in Fig. 1 nicht dargestellte, in der Wandung des Turbinengehäuses 10 links vom Ventilelement 16 ausgebildete Abgas-Durchlassöffnung vollständig und möglichst gasdicht verschließen zu können - hierfür ist eine in Fig. 2 dargestellte Wand 10a des Turbinengehäuses 10 mit einem Ventilsitz 16a versehen, welcher die in Fig. 2 gleichfalls gezeigte Abgas-Durchlassöffnung 16b umschließt. Wie sich aus dem Folgenden noch ergibt, wird bei der dargestellten Ausführungsform das Ventilelement 16 so bewegt, dass es die Abgas-Durchlassöffnung 16b nicht nur vollständig verschließen, sondern auch mehr oder minder oder vollständig freigeben kann. Mit Hilfe des Ventilelements 16 lässt sich so ein von einem in Fig. 1 nicht dargestellten, im Turbinengehäuse 10 ausgebildeten Kanal gebildeter Bypasspfad für den Abgasstrom verschließen oder teilweise oder vollständig öffnen, um den in das Turbinengehäuse 10 eintretenden Abgasstrom vollständig, teilweise oder überhaupt nicht über die Abgasturbolader-Turbine zu führen, indem der Abgasstrom mit Hilfe des Bypasspfads ggf. teilweise oder vollständig aus dem Abgas-Anströmpfad 14 abgeführt wird. Die in Fig. 2 gezeigte Abgas-Durchlassöffnung 16b stellt jedoch den Beginn des Bypasspfads dar.

Den Figuren 1 und 2 lässt sich entnehmen, dass das tellerartige Ventilelement 16 eine in diesem Fall kreisringförmig gestaltete Dichtfläche 16c aufweist, die in einer Ebene liegt und mit einer entsprechenden Dichtfläche 16a' des Ventilsitzes 16a zusammenwirkt. An das tellerartige Ventilelement 16 ist ein Schaft 16d angeformt, dessen Achse in Fig. 2 mit 16e bezeichnet wurde und dessen freies, gemäß Fig. 2 oberes Ende mit einem verdickten Kopf 16f versehen ist. Zwischen diesem Kopf und dem tellerartigen Ventilelement 16 weist der Schaft 16d eine gemäß Fig. 2 obere Ringschulter 16g auf, und am Übergang des Schafts in das Ventilelement 16 ist eine gemäß Fig. 2 untere Ringschulter 16h vorgesehen.

Anhand der Fig. 3 bis 6 und 6A wird im Folgenden eine Baugruppe beschrieben, welche das Ventilelement, die Letzteres tragenden sowie die das Ventilelement zwischen einer Offen- und einer Schließstellung bewegenden Teile umfasst.

Zu dieser Baugruppe gehört eine wellenartige Spindel 20, an welche ein etwas anders als in Fig. 1 dargestellt gestalteter Ventilelement-Träger 22 angeformt ist, der sich nach Art eines Arms quer von der eine Achse 20a aufweisenden Spindel 20 weg erstreckt und über den größten Teil seiner Länge einen im Wesentlichen rechteckigen Querschnitt und damit zwei flache Seiten 22a und 22b besitzt. In der Nähe seines freien Endes hat der Ventilelement-Träger 22 ein insbesondere kreisrundes Loch 22c, welches vom Schaft 16d durchgriffen wird, so dass sich die am Übergang dieses Schafts in das Ventilelement 16 vorgesehene Ringschulter 16h auf der Seite 22b des Ventilelement-Trägers 22 abstützen kann.

Zwischen dem Kopf 16f des Schafts 16d und dem Ventilelement-Träger 22 ist eine Unterlegscheibe 24 angeordnet, welche zwei vorzugsweise insgesamt ebene und zueinander parallele Stirnseiten 24a und 24b besitzt, von denen sich die Letztere auf der Ringschulter 16g des Schafts 16d abstützt. Der Abstand der beiden Ringschultern 16g und 16h voneinander, die Dicke des mit dem Loch 22c versehenen Bereichs des Ventilelement-Trägers 22 und die Dicke der Unterlegscheibe 24 sind so aufeinander abgestimmt, dass sich zwischen der durch den Kopf 16f gegen die Ringschulter 16g angelegten Unterlegscheibe 24 und dem gegen die Ringschulter 16h anliegenden Ventilelement-Träger 22 ein Ringspalt ergibt, in dem ein ringförmiges und vom Schaft 16d durchsetztes Federelement 30 angeordnet ist.

Bei der dargestellten Ausführungsform wird zunächst der am Ventilelement 16 vorgesehene Schaft 16d durch das Loch 22c des Ventilelement-Trägers 22 hindurchgeführt, worauf das Federelement 30 und die gleichfalls ringförmige Unterlegscheibe 24 auf den Schaft 16d aufgeschoben werden, wobei die Unterlegscheibe gegen die Ringschulter 16g angelegt wird. Anschließend wird das freie Ende des Schafts 16d, welches zunächst den Kopf 16f noch nicht aufweist, durch eine Art Nietvorgang so verformt, dass der verdickte Kopf 16f entsteht, bei dessen Bildung die Unterlegscheibe 24 gegen die Ringschulter 16g angepresst wird und durch den das Ventilelement 16 am Ventilelement-Träger 22 gesichert wird sowie das Federelement 30 und die Unterlegscheibe 24 auf dem Schaft 16d gehalten werden.

Wie die Fig. 6 deutlich erkennen lässt, liegt das Federelement 30 mit seinen beiden Seiten gegen ebene, senkrecht zur Achse 16e verlaufende Flächen an, welche von der Seite 22a des Ventilelement-Trägers 22 und der einen Stirnseite 24b der Unterlegscheibe 24 gebildet werden. Die Gestaltung und Funktion des Federelements 30 wird im Folgenden noch beschrieben werden.

Wie sich aus Fig. 3 ergibt, wird die Spindel 20 durch eine Lagerbuchse 40 gehalten und ist in dieser um die Spindelachse 20a verdrehbar gelagert. Die Lagerbuchse 40 ist in einer in Fig. 1 erkennbaren Wand 10b des Turbinengehäuses 10 befestigt, es ist aber auch möglich, die Spindel 20 unmittelbar in einer entsprechend gestalteten Öffnung der Wand 10b zu halten und um die Spindelachse 20a verdrehbar zu lagern.

Zur Fig. 1 ist noch anzumerken, dass diese eine gegenüber der Fig. 4 modifizierte Ausführungsform des Ventilelement-Trägers zeigt, welcher in Fig. 1 mit 22' bezeichnet wurde; ferner zeigt die Fig. 1 eine alternative Gestaltung des freien Endes des Schafts 16d des Ventilelements 16, weshalb in Fig. 1 dieses ein Widerlager bildende freie Schaftende mit 16f' bezeichnet wurde - anders als in Fig. 1 dargestellt, wird in der Praxis dieses Widerlager von einer Scheibe gebildet, welche mit dem eigentlichen Schaft z.B. durch Schweißen fest verbunden ist. Schließlich sei noch erwähnt, dass die Fig. 1 eine andere Anordnung des Ventilelements 16 am Ventilelement-Träger 22' zeigt.

Das gemäß Fig. 3 obere Ende der Spindel 20 durchgreift ein in Fig. 3 nicht erkennbares Loch eines Stellhebels 42 und ist mit diesem zumindest drehfest, vorzugsweise aber auch in Richtung der Spindelachse 20a unverschiebbar verbunden; die hierfür erforderlichen Mittel sind dem Fachmann geläufig und brauchen deshalb nicht erläutert zu werden.

An dem zusammen mit der Spindel 20 um die Spindelachse 20a verdrehbaren Stellhebel 42 greift ein Stellhebel-Betätigungselement 46 an, welches bei der in Fig. 3 dargestellten Ausführungsform arm- oder hebelartig gestaltet ist, aber auch eine andere Form haben könnte, da es nur die Funktion erfüllen muss, den Stellhebel 42 um die Spindelachse 20 schwenken zu können. Das Stellhebel-Betätigungselement 46 ist am Stellhebel 42 derart angelenkt, dass es sich gegenüber Letzterem zumindest um eine Schwenkachse 48 verschwenken lässt, welche parallel zur Achse 20a der Spindel 20 verläuft.

Die Fig. 2 zeigt das Ventilelement 16 in seiner Schließstellung, in welcher es mit seiner kreisringförmigen Dichtfläche 16c (sh. insbesondere die Fig. 1) gegen die gleichfalls kreisringförmige Dichtfläche 16a' (sh. Fig. 2) des Ventilsitzes 16a anliegt. Wie die Fig. 5 erkennen lässt, wird das Ventilelement 16 durch Verdrehen der Spindel 20 um die Spindelachse 20a geschwenkt, und unter der Annahme, dass die Fig. 5 das Ventilelement 16 in seiner Offenstellung zeigt, wird es durch Verdrehen der Spindel 20 entsprechend den in die Fig. 5 eingezeichneten Pfeilen S von seiner Offenstellung in seine Schließstellung geschwenkt, und zwar um einen Schwenkwinkelbereich, dessen Bereichsgrenzen durch die Offenstellung und die Schließstellung des Ventilelements definiert werden und welcher eine senkrecht zur Spindelachse 20a sowie zur Ebene der Ventilelement-Dichtfläche 16c verlaufende Schwenkwinkelebene definiert, die mit der Zeichnungsebene der Fig. 5 zusammenfällt und in welcher die Längsachse 16e des Ventilelement-Schafts 16d liegt, wenn das in den Figuren 6 und 6A gezeigte, aus einem Metallblech hergestellte ringförmige Federelement vor dem Einbau um seine vom Ventilelement-Schaft 16d durchsetzte Öffnung herum überall dieselbe Höhe hat (so wie dies die Figuren 6 und 6A auch für den eingebauten Zustand zeigen), das Ventilelement 16 mit seiner Ringschulter 16h ringsum gegen die flache Seite 22b des Ventilelement-Trägers 22 anliegt und die dem Ventilelement-Träger 22 zugewandte flache Stirnseite der Unterlegscheibe 24 sowie die beiden flachen Seiten 22a und 22b des Ventilelement-Trägers parallel zueinander verlaufen - dies bedeutet mit anderen Worten, dass bei sich in seiner Offenstellung befindlichem Ventilelement 16 die beiden Anlageflächen des Federelements 30, mit welchen dieses gegen die beiden benachbarten Widerlagerflächen für das Federelement anliegt, in zueinander parallelen Ebenen liegen, so wie dies bei bevorzugten Ausführungsformen des noch zu erörternden erfindungsgemäßen Federelements der Fall sein soll.

Anhand der Figuren 7 und 8 wird im Folgenden eine bevorzugte Ausführungsform des erfindungsgemäßen Federelements beschrieben.

Das Federelement 60 wurde vorzugsweise durch einen Stanz- und Prägevorgang aus einem Metallblech hergestellt, dessen Material auch bei den höchsten Temperaturen der in den Turbolader einströmenden Abgase mindestens noch solche federelastischen Eigenschaften aufweist, dass diese für die Funktion des Federelements ausreichend sind. Ausweislich der Fig. 7 hat das Federelement 60 einen kreisförmigen Außenrand. Ferner ist das Federelement 60 mit einer Federelement-Öffnung 62 versehen und hat infolgedessen eine ringförmige Gestalt. Bevorzugt hat die Federelement-Öffnung 62 eine längliche, insbesondere ovale Form, und vorzugsweise liegt das Zentrum der Federelement-Öffnung 62 im Zentrum des Federelements 60; die Federelement-Öffnung könnte aber auch eine kreisrunde Öffnung sein. Der kleinste Durchmesser der Federelement-Öffnung sollte so bemessen sein, dass er nur ganz geringfügig größer ist als der Durchmesser des Ventilelement-Schafts 16d in demjenigen Schaftbereich, welcher bei montiertem Federelement in der Federelement-Öffnung liegt; hat dieser Schaftbereich einen anderen als einen kreisrunden Querschnitt, muss der kleinste Durchmesser der Federelement-Öffnung an denjenigen Durchmesser-Bereich des Ventilelement-Schafts angepasst sein, mit welchem der Ventilelement-Schaft dem Rand der Federelement-Öffnung im Bereich ihres kleinsten Durchmessers am nächsten kommt.

In der in Fig. 7 dargestellten Draufsicht auf das Federelement 60 besitzt dieses einen radial äußeren Ringbereich 64, einen radial inneren Ringbereich 66 und zwischen diesen Ringbereichen einen ringförmigen Übergangsbereich 68, wobei ausweislich der Fig. 8 die beiden Ringbereiche 64 und 66 in zueinander parallelen und zur Federelement-Achse 60a senkrechten Ebenen liegen, wenn das Federelement noch nicht eingebaut, das heißt noch keinen Pressungskräften (in Richtung der Federelement-Achse 60a) ausgesetzt ist.

Ausweislich der Fig. 8 wird der Übergangsbereich 68 von einer Halbsicke gebildet, welche mit einem radial äußeren Sickenfuß 68a in den radial äußeren Ringbereich 64 und mit einem radial inneren Sickenfuß 68b in den radial inneren Ringbereich 66 übergeht. In Fig. 8 wurde die in Richtung der Federelement-Achse 60a gemessene Höhe dieser Halbsicke mit H bezeichnet, während die Breite des Übergangsbereichs 68 mit B bezeichnet wurde.

Unabhängig von seiner Querschnittsform muss der Übergangsbereich des Federelements auf alle Fälle so gestaltet sein, dass sich der radial äußere und der radial innere Ringbereich des Federelements einander federelastisch annähern können (in Richtung der Federelement-Achse), wenn das Federelement eingebaut bzw. axialen Pressungskräften unterworfen wird.

Die Steifigkeit einer Voll- oder Halbsicke wird abgesehen von den Materialeigenschaften und der Blechdicke vom Verhältnis Sickenbreite zu Sickenhöhe bestimmt - bei überall gleicher Sickenhöhe ist die Steifigkeit der Sicke umso kleiner, je größer die Sickenbreite ist. Erfindungsgemäß weist nun der Übergangsbereich des Federelements um die Federelement-Öffnung herum keine konstante Breite auf; vielmehr variiert die radiale Breite des Übergangsbereichs und damit dessen Steifigkeit um die Federelement-Öffnung herum, so dass der Übergangsbereich zwei erste Längsabschnitte aufweist, in welchen der Übergangsbereich seine größte Breite, insbesondere seine größte mittlere Breite aufweist. Bei dem in den Figuren 7 und 8 dargestellten Federelement 60 hat der Übergangsbereich 68 zwei solche erste Längsabschnitte 70 größter mittlerer Breite, welche sich in einer Draufsicht auf das Federelement bezüglich der Federelement-Achse 60a gegenüberliegen (gemäß Fig. 7 in horizontaler Richtung), sowie zwischen diesen ersten Längsabschnitten 70 zwei zweite Längsabschnitte 72 kleinster mittlerer Breite. Vorzugsweise wird das Federelement 60 so gestaltet, dass, bezogen auf eine gemäß Fig. 7 horizontale Durchmesserlinie des Federelements bzw. die Linie 8-8 in Fig. 7 sowie die Federelement-Achse 60a, sich jeder der Längsabschnitte 70 über einen Winkel von ungefähr 90° erstreckt, dessen Winkelhalbierende von der horizontalen Durchmesserlinie gebildet wird, und dass sich jeder der zweiten Längsabschnitte 72 gleichfalls über einen Winkel von ungefähr 90° erstreckt, dessen Winkelhalbierende von einer durch die Federelement-Achse 60a verlaufenden, gemäß Fig. 7 vertikalen Linie gebildet wird.

In den Bereichen der ersten Längsabschnitte 70 ist das Federelement 60 also weicher, das heißt von gegenüber senkrecht zur Zeichnungsebene der Fig. 7 senkrechten Pressungskräften geringerer Steifigkeit als in den zweiten Längsabschnitten 72, weil der Übergangsbereich 68, das heißt die Flanke der Halbsicke, in den ersten Längsabschnitten 70 gegenüber der Federelement-Achse 60a stärker geneigt ist als in den zweiten Längsabschnitten 72; dabei ist unter der Neigung jeweils der Mittelwert des Neigungswinkels des betreffenden Längsabschnitts zu verstehen, da die Breite des Übergangsbereichs entlang eines jeden dieser Längsabschnitte nicht konstant ist sondern kontinuierlich abnimmt bzw. zunimmt (sh. Fig. 7). Ferner ist unter dem Neigungswinkel des Übergangsbereichs 68 derjenige spitze Winkel zu verstehen, den der Übergangsbereich 68 (an der jeweils betrachteten Stelle des Übergangsbereichs) mit der Federelement-Achse 60a bildet, und zwar in einem Querschnitt durch das Federelement.

Bevorzugte Ausführungsformen des erfindungsgemäßen Federelements zeichnen sich durch mindestens eines der folgenden Abmessungsverhältnisse aus:
Das Verhältnis der größten Sickenbreite zur kleinsten Sickenbreite beträgt ungefähr 1,5 bis 2,5 und vorzugsweise ungefähr 2;
das Verhältnis mittlere Sickenbreite zu mittlerem Sickendurchmesser beträgt 0,1 bis 0,2, vorzugsweise ungefähr 0,15;
das Verhältnis Sickenhöhe zu mittlerer Sickenbreite beträgt 0,3 bis 0,5 und vorzugsweise ungefähr 0,4;
bei einem Federelement mit einer länglichen Federelement-Öffnung beträgt das Verhältnis des kleinsten Öffnungsdurchmessers zum größten Öffnungsdurchmesser 0,5 bis 1,0, insbesondere 0,6 bis 0,9 und vorzugsweise 0,7 bis 0,8.

Die in einer Draufsicht auf das Federelement gemessene radiale Breite des radial äußeren und des radial inneren Ringbereichs kann um die Federelement-Öffnung herum ungefähr konstant sein, aber auch variieren, da diese Breiten nur von dem in einer erfindungsgemäßen Ventilvorrichtung für das Federelement zur Verfügung stehenden Bauraum sowie den Abmessungen des Ventilelement-Schafts abhängen. Bei einem erfindungsgemäßen Federelement weisen der radial äußere und der radial innere Ringbereich 64 bzw. 66 jedoch bevorzugt eine zumindest im Wesentlichen konstante Breite auf, wobei die Breite des radial äußeren Ringbereichs ungefähr gleich groß ist wie die Breite des radial inneren Ringbereichs, und wobei dann das Verhältnis dieser Breite zum Außendurchmesser des Federelements 60 vorzugsweise 0,03 bis 0,05 und insbesondere ungefähr 0,04 beträgt.

Für die Herstellung eines erfindungsgemäßen Federelements werden besonders Bleche aus den folgenden Legierungen empfohlen:
- Nickelbasislegierungen und Molybdänbasislegierungen;
- gamma'-phasengehärtetes hochtemperaturbeständiges Metall, vorzugsweise
- NiCo20Cr20MoTi (Werkstoff-Nr. 2.4650), Legierung DIN 17744/17750 nach DIN 59746/DIN EN ISO 9445;
- Alloy 625 (Werkstoff-Nr. 2.4856), DIN EN 10095;
- Alloy 263 (Werkstoff-Nr. 2.4650);
- Waspaloy (Werkstoff-Nr. 2.4654);
- NiCr19Fe19Nb5Mo3 (Werkstoff-Nr. 2.4668) nach DIN 59746/ DIN EN ISO 9445.

Generell wird als Material ein Metall empfohlen, welches bei den Anwendungstemperaturen eine Zeitstandfestigkeit von mindestens 4 bis 7 % des Ausgangswertes bei Raumtemperatur aufrechterhält.

Anhand der Figuren 9 und 10 werden im Folgenden die wesentlichen Teile einer bevorzugten Ausführungsform der erfindungsgemäßen Ventilvorrichtung erläutert, welche das in den Figuren 7 und 8 dargestellte Federelement 60 enthält. In den Figuren 9 und 10 wurden, abgesehen von den Bezugszeichen für das Federelement 60 und dessen Elemente, soweit möglich dieselben Bezugszeichen wie in den Figuren 1 bis 6 und 6A verwendet, jedoch erhöht um die Zahl 100, weil bei der in den Figuren 9 und 10 dargestellten Ausführungsform beispielsweise die Spindel und der Ventilelement-Träger etwas anders gestaltet sind als bei der sich aus den Figuren 1 bis 6 und 6A ergebenden Ventilvorrichtung.

Die Fig. 9 zeigt in einer Seitenansicht eine der Spindel 20 entsprechende, wenn auch etwas anders gestaltete Spindel 120, welche im nicht dargestellten Turbinengehäuse um ihre Längsachse 120a verdrehbar gelagert sein soll; an der Spindel ist ein gleichfalls etwas anders gestalteter Ventilelement-Träger 122 befestigt, der sich nach Art eines Arms von der Spindel 120 bzw. der Spindelachse 120a wegerstreckt und in gleicher Weise ein Ventilelement 116 trägt, wie dies bei der in den Figuren 1 bis 6 gezeigten bekannten Ventilvorrichtung bezüglich des Ventilelements 16 sowie der Spindel 20 der Fall ist.

Die Fig. 9 zeigt eine Draufsicht auf das Ventilelement 116, und zwar auf die von dessen Dichtfläche abgewandte Rückseite, weshalb in Fig. 9 ein Ventilelement-Schaft 116d erkennbar ist, welcher die Federelement-Öffnung 62 des Federelements 60 durchsetzt.

Die Fig. 9 zeigt den Ventilelement-Schaft 116d, ehe dessen freies Ende mit einem dem Kopf 16f entsprechenden Widerlager versehen wurde.

Ausweislich der Fig. 10 durchgreift der Ventilelement-Schaft 116d eine Öffnung 122c des Ventilelement-Trägers 122, welche ebenso wie der Ventilelement-Schaft einen kreisrunden Querschnitt haben kann; ein Spiel des Ventilelement-Schafts in der Öffnung des Ventilelement-Trägers (in Richtung quer zur Schaftachse) erlaubt dann und bestimmt den maximalen Winkel, um den sich das Ventilelement gegenüber dem Ventilelement-Träger kippen lässt. Der in Fig. 10 gezeigte Ventilelement-Träger 122 hat zwar eine Öffnung 122c, deren Durchmesser deutlich größer ist als der Außendurchmesser des in dieser Öffnung liegenden Bereichs des Ventilelement-Schafts 116d, jedoch kann die Öffnung des Ventilelement-Trägers auch an diesen Schaft-Durchmesser angepasst werden, um den Schaft des Ventilelements mit Spiel in der Öffnung des Ventilelement-Trägers zentrisch zu halten.

Das Ventilelement 116 liegt mit einer Ringfläche seiner Ringschulter 116h gegen eine flache Seite 122b des Ventilelement-Trägers 122 an, welche ebenso wie die Ringfläche der Ringschulter 116h vorzugsweise in einer zur Schaftachse 116e senkrechten Ebene verläuft. Das Federelement 60 liegt mit seinem radial inneren Ringbereich 66 gegen eine flache Seite 122a des Ventilelement-Trägers 122 und mit seinem radial äußeren Ringbereich 64 gegen eine flache Seite einer Scheibe 124 an, wobei auch diese beiden flachen Seiten in zur Schaftachse 116e senkrechten Ebenen liegen. Mit einem verjüngten freien Endbereich durchgreift der Ventilelement-Schaft 116d eine zentrale Öffnung der Scheibe 124, für welche der freie Endbereich des Ventilelement-Schafts 116d (nach dem Zusammenbau der vorstehend erwähnten Teile) mit einem ähnlich einer Ringscheibe geformten Widerlager 116f versehen wird, welches am Ventilelement-Schaft 116d fest angebracht ist und in seiner Funktion dem Kopf 16f der in den Figuren 1 bis 6 gezeigten bekannten Ventilvorrichtung entspricht.

Die vorstehend beschriebenen Teile sollen so dimensioniert und das Widerlager 116f soll so positioniert sein, dass das Federelement 60 zwischen dem Ventilelement-Träger 122 und der Scheibe 124 unter einer gewissen Vorspannung (in Richtung der Schaftachse 116e) eingespannt ist.

Erwähnenswert ist noch, dass das Federelement 60 längs des Rands seiner Öffnung 62 mit mehreren, in radialer Richtung nach innen vorspringenden und in Umfangsrichtung der Federelement-Öffnung voneinander beabstandeten Vorsprüngen versehen sein kann, welche gegen den Außenumfang des Ventilelement-Schafts 116d anliegen und so das Federelement am Ventilelement 116 zentrieren; zusätzlich oder alternativ kann das Federelement 60 auch an seinem Außenumfang mit in Umfangsrichtung voneinander beabstandeten Vorsprüngen versehen sein, welche in axialer Richtung so abgebogen sind, dass sie gegen den Außenumfang der Scheibe 124 anliegen, um so das Federelement 60 an der Scheibe 124 zu zentrieren und/oder die Scheibe 124 bezüglich der Schaftachse 116e zu zentrieren.

Wenn bei der in den Figuren 9 und 10 dargestellten Ventilvorrichtung die Spindel 120 um ihre Längsachse 120a verdreht und dadurch das mit dem in Fig. 2 gezeigten Ventilsitz 16a zusammenwirkende Ventilelement 116 von seiner Offenstellung in seine Schließstellung bewegt wird, führt das Ventilelement 116 eine Schwenkbewegung um die Spindelachse 120a durch und wird dabei zunächst mit einem ersten Dichtflächenbereich seiner Dichtfläche 116a gegen die Dichtfläche 16a' des Ventilsitzes 16a (sh. Fig. 2) angelegt, weil das Ventilelement 116 eine Schwenkbewegung durchführt und seine Dichtfläche 116c auch kurz vor dem Anlegen gegen die Dichtfläche 16a' des Ventilsitzes 16a nicht parallel zur Dichtfläche 16a' verläuft; außerdem haben schon Fertigungstoleranzen sowie im Betrieb des Turboladers auftretende unterschiedliche Wärmedehnungen der Komponenten der erfindungsgemäßen Ventilvorrichtung zur Folge, dass die Dichtfläche 116c des Ventilelements 116 auch kurz vor dessen Schließstellung gegenüber der Dichtfläche 16a' des Ventilsitzes 16a wenn auch nur geringfügig gekippt sein kann.

Wie sich aus der Fig. 9 ergibt, liegt derjenige Bereich der Ventilelement-Dichtfläche 116c, welcher kurz vor der Schließstellung des Ventilelements gegen die Dichtfläche 16a' des Ventilsitzes 16a angelegt wird, in Richtung senkrecht zur Längsachse 116e des Ventilschafts 116d gesehen hinter dem gemäß Fig. 9 rechten ersten Längsabschnitt 70 der Halbsicke bzw. des Übergangsbereichs 68 des Federelements 60, wenn auch in bezüglich der Achse 116e radial nach außen etwas versetzt. Infolgedessen, nämlich wegen der geringeren Steifigkeit dieses Sicken-Längsabschnitts 70, erfordert es eine geringere Kraft, um die Ventilelement-Dichtfläche 116c an die Dichtfläche 16a' des Ventilsitzes 16a anzupassen, ehe das Ventilelement zumindest im Wesentlichen gasdicht an den Ventilsitz 16a angepresst wird.

Dieser Vorteil des erfindungsgemäßen Federelements setzt allerdings voraus, dass dieses auf dem Ventilelement-Schaft relativ zum Ventilelement-Träger zumindest im Wesentlichen unverdrehbar gehalten ist, um die Winkelposition des Längsabschnitts 70 zumindest im Wesentlichen zu sichern (wenn vorstehend davon die Rede ist, dass das Federelement auf dem Ventilelement-Schaft gehalten ist, soll hierunter nur verstanden werden, dass das Federelement so gehalten ist, dass der Ventilelement-Schaft das Federelement durchsetzt, nicht aber, dass der Ventilelement-Schaft für die Verdrehsicherung des Federelements ursächlich sein muss).

Um eine Verdrehsicherung des Federelements 60 relativ zum Ventilelement-Träger 122 zu bewirken, stehen dem Fachmann die unterschiedlichsten Mittel zur Verfügung: So könnte eine Stelle des radial inneren Ringbereichs 66 des Federelements insbesondere durch Punktschweißen mit dem Ventilelement-Träger 122 verbunden werden, eine Stelle des radial inneren Ringbereichs 66 könnte durch Prägen mit einem noppen- oder rippenartigen Vorsprung versehen werden, welcher in eine entsprechende Vertiefung in der flachen Seite 122a des Ventilelement-Trägers 122 eingreift, und/oder kann die erfindungsgemäße Ventilvorrichtung so gestaltet sein, wie dies in Fig. 11 dargestellt ist und im Folgenden erläutert wird.

Die Fig. 11 ist bis auf die folgenden Unterschiede mit der Fig. 10 im Wesentlichen identisch, so dass nur diese Unterschiede beschrieben werden müssen:
Das in Fig. 11 gezeigte erfindungsgemäße Federelement 60' unterscheidet sich von dem in den Figuren 7 bis 10 dargestellten Federelement 60 durch mehrere in Umfangsrichtung des Federelements voneinander beabstandete und in axialer Richtung abgebogene Blechzungen 61, und die Öffnung 122c des Ventilelement-Trägers 122 hat keinen kreisrunden Querschnitt, zumindest nicht in ihrem dem Federelement 60' benachbarten axialen Endbereich.

Zumindest in diesem Endbereich hat die Öffnung 122c eine längliche, insbesondere eine ovale Querschnittsform, und das Federelement 60' ist mit zwei einander bezüglich der Federelement-Achse gegenüberliegenden Blechzungen 61 versehen, welche in Umfangsrichtung des Federelements so angeordnet sind, dass sie in die Öffnung 122c des Ventilelement-Trägers 122 an einander gegenüberliegende Stellen der Öffnung eingreifen, in denen zumindest dieser Öffnungsbereich seinen größten Durchmesser hat. Wie ein Vergleich der Fig. 11 mit der Fig. 9 erkennen lässt, befinden sich diese beiden Blechzungen 61 dann in sich auf die Federelement-Achse 60a (sh. Fig. 7) beziehenden Umfangswinkelpositionen des Federelements 60', in welchen sich auch die zweiten Längsabschnitte 72 des Übergangsbereichs 68 befinden, so dass durch die Blechzungen 61 die richtige Position des gemäß Fig. 9 rechten ersten Längsabschnitts 70 des Federelements gesichert wird.

Wie sich bei einer Betrachtung der Fig. 11 ergibt, stehen aber auch alternative Möglichkeiten für eine Verdrehsicherung des Federelements 60' zur Verfügung: So könnten die beiden Blechzungen 61 gegenüber der in Fig. 11 dargestellten Ausführungsform radial nach außen etwas versetzt sein und könnte die Wandung der Öffnung 122c des Ventilelement-Trägers 122 mit an die Form der Blechzungen 61 angepassten Vertiefungen versehen sein, in welche diese Blechzungen eingreifen, wenn das Federelement 60' auf den Ventilelement-Träger 122 aufgeschoben wird; auch könnte jede der Blechzungen 61 durch Prägen mit einem insbesondere noppen- oder rippenförmigen radial nach außen orientierten Vorsprung versehen sein und könnte die Wandung der Öffnung 122c des Ventilelement-Trägers 122 mit entsprechend gestalteten und angeordneten Vertiefungen versehen sein, in welche diese Vorsprünge eingreifen (bei noppenartiger oder ähnlicher Gestaltung dieser Vorsprünge könnten dies auch dazu dienen, das Federelement 60' am Ventilelement-Träger 122 in axialer Richtung zu sichern).

Es sei noch erwähnt, dass in Fig. 11 die in Fig. 10 gezeigte Scheibe 124 und das dort dargestellte Widerlager 116f der Einfachheit wegen weggelassen wurden.

## Patentansprüche

1. Federelement (60) für eine Wastegate-Klappe (116) eines Turboladers, welches tellerartig gestaltet und aus einem Metallblech hergestellt ist sowie eine zentrale Öffnung (62) mit einer Achse (60a) aufweist, wobei das Federelement bezüglich der Achse (60a) seiner Öffnung und in Richtung dieser Achse gesehen einen kreisförmigen Außenrand, einen radial äußeren Ringbereich (64), einen an die Federelement-Öffnung angrenzenden radial inneren Ringbereich (66) sowie zwischen diesen einen solchen ringförmigen Übergangsbereich (68) aufweist, dass der radial äußere Ringbereich gegenüber dem radial inneren Ringbereich in Richtung der Achse der Federelement-Öffnung versetzt ist, und wobei der äußere sowie der innere Ringbereich eben sind und in zur Achse (60a) der Federelement-Öffnung senkrechten Ebenen liegen und der Übergangsbereich von einer die Federelement-Öffnung umschließenden Halbsicke mit einem in den radial äußeren Ringbereich übergehenden radial äußeren Sickenfuß (68a), einem in den radial inneren Ringbereich übergehenden radial inneren Sickenfuß (68b) und einer die beiden Sickenfüße miteinander verbindenden Sickenflanke gebildet wird, **dadurch gekennzeichnet, dass** in Richtung der Achse (60a) der Federelement-Öffnung (62) gesehen die Breite des Federelement-Übergangsbereichs (68) und damit die Steifigkeit des Übergangsbereichs gegenüber in Richtung der Achse der Federelement-Öffnung orientierten Pressungskräften um die Federelement-Öffnung herum so variiert, dass der Übergangsbereich zwei einander bezüglich der Federelement-Öffnung gegenüberliegende erste Längsabschnitte (70) größter mittlerer Breite und zwischen diesen beiden ersten Längsabschnitten zwei einander bezüglich der Federelementöffnung gleichfalls gegenüberliegende zweite Längsabschnitte (72) kleinster mittlerer Breite aufweist, und dass die Sickenflanke in den ersten Längsabschnitten des Übergangsbereichs gegenüber der Achse der Federelement-Öffnung stärker geneigt ist als in den zweiten Längsabschnitten.

2. Federelement nach Anspruch 1, wobei in jedem die Achse (60a) der Federelement-Öffnung (62) enthaltenden Querschnitt durch das Federelement die Sickenflanke gegenüber der Achse der Federelement-Öffnung derart geneigt ist, dass der radial äußere Sickenfuß (68a) einen größeren Abstand von der Öffnungsachse hat als der radial innere Sickenfuß (68b).

3. Federelement nach Anspruch 1 oder 2, wobei der radial äußere Ringbereich (64) die Gestalt eines Kreisrings, die Federelement-Öffnung (62) eine ovale Form und der an die Federelement-Öffnung angrenzende innere Ringbereich (66) überall dieselbe Breite hat.

4. Federelement nach Anspruch 3, wobei die Federelement-Öffnung (62) aufgrund ihrer ovalen Form zwei Längsendbereiche aufweist, welche in Umfangsrichtung der Federelement-Öffnung jeweils zwischen den beiden ersten Längsabschnitten (70) des Übergangsbereichs (68) angeordnet sind.

5. Ventilvorrichtung für einen Abgas-Bypasspfad eines Turboladers, welche aufweist:
- ein tellerartiges Ventilelement (116), das eine in einer Ebene liegende Dichtfläche (116c) und einen sich von Letzterer weg erstreckenden Schaft (116d) aufweist sowie zwischen einer Schließstellung und einer Offenstellung bewegbar ist,
- einen Ventilelement-Träger (122), mit welchem das Ventilelement mittels seines Schafts verbunden, jedoch relativ zum Ventilelement-Träger in Richtung senkrecht zur Ventilelement-Dichtfläche begrenzt beweglich ist,
- eine Spindel (120), welche um eine Spindellängsachse (120a) verdrehbar gehalten sowie mit dem Ventilelement-Träger fest verbunden ist, so dass das Ventilelement durch Verdrehen der Spindel zwischen seiner Schließ- und seiner Offenstellung bewegbar ist,
- einen eine Abgas-Durchlassöffnung (16b) umschließenden Ventilsitz (16a), gegen welchen die Ventilelement-Dichtfläche in der Schließstellung des Ventilelements mit einer Dichtpressung gasdicht anliegt, und
- ein Federelement (60) nach einem der Ansprüche 1 bis 4,
wobei
- die Öffnung (62) des Federelements vom Ventilelement-Schaft (116d) durchsetzt wird,
- durch den Ventilelement-Träger das Ventilelement derart gehalten ist, dass - in Richtung der Spindellängsachse gesehen - durch Verdrehen der Spindel die von der Ventilelement-Dichtfläche definierte Ebene um die Spindellängsachse um einen Schwenkwinkelbereich schwenkbar ist, dessen Bereichsgrenzen durch die Schließstellung sowie die Offenstellung des Ventilelements definiert werden und welcher eine senkrecht zur Spindellängsachse sowie zur Ebene der Ventilelement-Dichtfläche verlaufende Schwenkwinkelebene definiert, in welcher die Längsachse (116e) des Ventilelement-Schafts liegt, und
- der radial äußere Ringbereich gegenüber dem radial inneren Ringbereich des Federelements in Richtung der Achse (60a) der Federelementöffnung derart versetzt ist, dass ein Spiel in Richtung der Längsachse des Ventilelement-Schafts zwischen dem Ventilelement und dem Ventilelement-Träger durch das Federelement zumindest nahezu beseitigt wird,
und wobei das Federelement (60; 60') auf dem Ventilelement-Schaft (116d) relativ zum Ventilelement-Träger (122) unverdrehbar gehalten ist und jeder erste Längsabschnitt (70) des Übergangsbereichs von der Schwenkwinkelebene durchquert wird und symmetrisch zu dieser angeordnet ist.

6. Ventilvorrichtung nach Anspruch 5, wobei das Federelement (60) eine Halbsicke aufweist, deren Flanke vom Federelement-Übergangsbereich (68) gebildet wird.

7. Ventilvorrichtung nach Anspruch 5 oder 6, wobei in Richtung senkrecht zur Ventilelement-Dichtfläche (116c) gesehen auch das Ventilelement (116) einen kreisförmigen äußeren Rand hat.

8. Verwendung eines Federelements (60; 60') nach einem der Ansprüche 1 bis 4 in einer Ventilvorrichtung nach einem der Ansprüche 5 bis 7 eines Turbolader-Abgas-Bypasspfads.

## Claims

1. A spring element (60) for a wastegate flap (116) of a turbocharger, which is substantially plate-like and is produced from a sheet metal and is provided with a central opening (62), wherein, with respect to the axis (60a) of its opening and as considered in the direction of this axis, the spring element has a circular outer edge, a radially outer ring region (64), a radially inner ring region (66) adjoining the spring element opening, and therebetween an annular transition region (68), such that the radially outer ring region is offset relative to the radially inner ring region in the direction of the axis of the spring element opening, and wherein the outer and the inner ring region are flat and lie in planes perpendicular to the axis (60a) of the spring element opening and the transition region is formed by a half bead surrounding the spring element opening and having a radially outer bead foot (68a) transitioning into the radially outer ring region, a radially inner bead foot (68b) transitioning into the radially inner ring region, and a bead flank connecting the two bead feet to one another,
**characterized in that**, as considered in the direction of the axis (60a) of the spring element opening (62), the width of the spring element transition region (68) and thus the rigidity of the transition region with respect to pressing forces oriented in the direction of the axis of the spring element opening, varies around the spring element opening such that the transition region has two first longitudinal portions (70) of greatest average width arranged opposite one another with respect to the spring element opening, and between these two first longitudinal portions has two second longitudinal portions (72) of smallest average width likewise arranged opposite one another with respect to the spring element opening, and that the bead flank in the first longitudinal portions of the transition region is more heavily inclined relative to the axis of the spring element opening than in the second longitudinal portions.

2. Spring element according to claim 1, wherein in each cross-section through the spring element containing the axis (60a) of the spring element opening (62), the bead flank is inclined relative to the axis of the spring element opening in such a way that the radially outer bead foot (68a) has a greater spacing from the opening axis than the radially inner bead foot (68b).

3. Spring element according to claim 1 or 2, wherein the radially outer spring element ring region (64) has the form of a circular ring, the spring element opening (62) has an oval form and the radially inner spring element ring region (66), adjoining the spring element opening has the same width everywhere.

4. Spring element according to claim 3, wherein the spring element opening (62), owing to its oval form, has two longitudinal end regions, which, in a circumferential direction of the spring element opening, are arranged between the two first longitudinal portions (70) of the transition region (68).

5. A valve device for an exhaust-gas bypass path of a turbocharger, said valve device having:
- a plate-like valve element (116), which has a sealing surface (116c), lying in a plane and a shaft (116d) extending away from the sealing surface and is movable between a closed position and an open position;
- a valve element carrier (122), to which the valve element is connected by means of its shaft, but is movable to a limited extent relative to the valve element carrier in a direction perpendicular to the valve element sealing surface;
- a spindle (120), which is held so as to be rotatable about a spindle longitudinal axis (120a) and is fixedly connected to the valve element carrier, such that the valve element is movable between its closed position and its open position by rotation of the spindle;
- a valve seat (16a), surrounding an exhaust-gas through-opening (16b), against which valve seat the valve element sealing surface bears with a sealing pressure in a gastight manner in the closed position of the valve element; and
- a spring element (60) according to one of claims 1 to 4, wherein the opening (62) of the spring element is penetrated by the valve element shaft (116d),
- by means of the valve element carrier, the valve element is held in such a way that, as considered in the direction of the spindle longitudinal axis, by rotating the spindle the plane defined by the valve element sealing surface is pivotable about the spindle longitudinal axis through a pivot angle range, the range limits of which are defined by the closed position and the open position of the valve element and which defines a pivot angle plane extending perpendicularly to the spindle longitudinal axis and to the plane of the valve element sealing surface, in which pivot angle plane the longitudinal axis (116e) of the valve element shaft lies, and
- the radially outer ring region is offset relative to the radially inner ring region in the direction of the axis of the spring element opening such that play in the direction of the longitudinal axis of the valve element shaft between the valve element and the valve element carrier is at least mostly eliminated by the spring element,
and wherein the spring element is held on the valve element shaft non-rotatably relative to the valve element carrier, and each first longitudinal portion (70) of the transition region is traversed by the pivot angle plane and arranged symmetrically with respect to said plane.

6. Valve device according to claim 5, wherein the spring element (60) has a half bead, the flank of which is formed by the spring element transition region (68).

7. Valve device according to claim 5 or 6, wherein, as considered in a direction perpendicular to the sealing surface (116c) of the valve element, also the valve element has a circular outer edge.

8. Use of a spring element (60; 60') according to one of claims 1 to 4 in a valve device according to one of claims 5 to 7 of a turbocharger-exhaust gas-bypass path.

## Revendications

1. Élément formant ressort (60) pour un clapet de soupape de décharge (116) d'un turbocompresseur, lequel est configuré en type à disques et est fabriqué à partir d'une tôle métallique et présente également une ouverture centrale (62) avec un axe (60a), dans lequel l'élément formant ressort présente, par rapport à l'axe (60a) de son ouverture et vu en direction dudit axe, un bord extérieur circulaire, une zone annulaire (64) radialement extérieure, une zone annulaire radialement intérieure (66) jouxtant l'ouverture d'élément formant ressort ainsi qu'entre celles-ci une zone de transition (68) annulaire telle que la zone annulaire radialement extérieure est décalée par rapport à la zone annulaire radialement intérieure en direction de l'axe de l'ouverture d'élément formant ressort, et dans lequel la zone annulaire extérieure et la zone annulaire intérieure sont planes et se situent dans des plans perpendiculaires par rapport à l'axe (60a) de l'ouverture d'élément formant ressort et la zone de transition est formée par une demi-nervure renfermant l'ouverture d'élément formant ressort avec un pied de nervure radialement extérieur (68a) devenant la zone annulaire radialement extérieure, un pied de nervure radialement intérieur (68b) devenant la zone annulaire radialement intérieure et un flanc de nervure reliant l'un à l'autre les deux pieds de nervure, **caractérisé en ce que** vue dans la direction de l'axe (60a) de l'ouverture d'élément formant ressort (62), la largeur de la zone de transition d'élément formant ressort (68) et ainsi la rigidité de la zone de transition varient autour de l'ouverture d'élément formant ressort par rapport à des forces de pression orientées en direction de l'axe de l'ouverture d'élément formant ressort de telle sorte que la zone de transition présente deux premières sections longitudinales (70) d'une plus grande largeur moyenne, qui se font face l'une l'autre par rapport à l'ouverture d'élément formant ressort, et, entre lesdites deux premières sections longitudinales, deux secondes sections longitudinales (72) de plus petite largeur moyenne, qui se font face également l'une l'autre par rapport à l'ouverture d'élément formant ressort, et que le flanc de nervure est plus fortement incliné dans les premières sections longitudinales de la zone de transition par rapport à l'axe de l'ouverture d'élément formant ressort que dans les secondes sections longitudinales.

2. Élément formant ressort selon la revendication 1, dans lequel dans chaque coupe transversale, contenant l'axe (60a) de l'ouverture d'élément formant ressort (62), à travers l'élément formant ressort, le flanc de nervure est incliné par rapport à l'axe de l'ouverture d'élément formant ressort de telle manière que le pied de nervure radialement extérieur (68a) a une plus grande distance par rapport à l'axe d'ouverture que le pied de nervure radialement intérieur (68b).

3. Élément formant ressort selon la revendication 1 ou 2, dans lequel la zone annulaire radialement extérieure (64) a la forme d'un anneau circulaire, l'ouverture d'élément formant ressort (62) a une forme ovale et la zone annulaire intérieure (66) jouxtant l'ouverture d'élément formant ressort a partout la même largeur.

4. Élément formant ressort selon la revendication 3, dans lequel l'ouverture d'élément formant ressort (62) présente en raison de sa forme ovale deux zones d'extrémité longitudinales, lesquelles sont disposées dans la direction périphérique de l'ouverture d'élément formant ressort respectivement entre les deux premières sections longitudinales (70) de la zone de transition (68) .

5. Dispositif de soupape pour une voie de dérivation de gaz d'échappement d'un turbocompresseur, lequel présente :
- un élément formant soupape (116) de type à disque, qui présente une surface d'étanchéité (116c) située dans un plan et une tige (116d) s'étendant de manière à s'éloigner de cette dernière et qui peut également être déplacé entre une position de fermeture et une position d'ouverture,
- un support d'élément formant soupape (122), auquel l'élément formant soupape est relié au moyen de sa tige, qui est mobile toutefois de manière limitée par rapport au support d'élément formant soupape en direction perpendiculaire par rapport à la surface d'étanchéité d'élément formant soupape,
- une broche (120), laquelle est maintenue de manière à pouvoir tourner autour d'un axe longitudinal de broche (120a) et est reliée également de manière solidaire au support d'élément formant soupape de sorte que l'élément formant soupape peut être déplacé par la rotation de la broche entre sa position de fermeture et sa position d'ouverture,
- un siège de soupape (16a) entourant une ouverture de passage de gaz d'échappement (16b), contre lequel la surface d'étanchéité d'élément formant soupape repose de manière étanche aux gaz avec une compression d'étanchéité dans la position de fermeture de l'élément formant soupape, et
- un élément formant ressort (60) selon l'une quelconque des revendications 1 à 4,
dans lequel
- l'ouverture (62) de l'élément formant ressort est traversée par la tige d'élément formant soupape (116d),
- l'élément formant soupape est maintenu par le support d'élément formant soupape de telle manière que - vu dans la direction de l'axe longitudinal de broche - le plan défini par la surface d'étanchéité d'élément formant soupape peut pivoter par la rotation de la broche autour de l'axe longitudinal de broche sur une zone angulaire de pivotement, dont les limites de zone sont définies par la position de fermeture ainsi que par la position d'ouverture de l'élément formant soupape, et laquelle définit un plan angulaire de pivotement s'étendant de manière perpendiculaire par rapport à l'axe longitudinal de broche ainsi que par rapport au plan de la surface d'étanchéité d'élément formant soupape, dans lequel se situe l'axe longitudinal (116e) de la tige d'élément formant soupape, et
- la zone annulaire radialement extérieure est décalée par rapport à la zone annulaire radialement intérieure de l'élément formant ressort en direction de l'axe (60a) de l'ouverture d'élément formant ressort de telle manière qu'un jeu en direction de l'axe longitudinal de la tige d'élément de soupape est au moins quasiment éliminé entre l'élément formant soupape et le support d'élément formant soupape par l'élément formant ressort,
et dans lequel l'élément formant ressort (60 ; 60') est maintenu sans pouvoir tourner sur la tige d'élément formant soupape (116d) par rapport au support d'élément formant soupape (122) et chaque première section longitudinale (70) de la zone de transition est traversée par le plan d'angle de pivotement et est disposée de manière symétrique par rapport à celui-ci.

6. Dispositif de soupape selon la revendication 5, dans lequel l'élément formant ressort (60) présente une demi-nervure, dont le flanc est formé par la zone de transition d'élément formant ressort (68).

7. Dispositif de soupape selon la revendication 5 ou 6, dans lequel vu en direction de manière perpendiculaire par rapport à la surface étanche d'élément formant soupape (116c), l'élément formant soupape (116) a également un bord extérieur circulaire.

8. Utilisation d'un élément formant ressort (60 ; 60') selon l'une quelconque des revendications 1 à 4 dans un dispositif de soupape selon l'une quelconque des revendications 5 à 7 d'une voie de dérivation de gaz d'échappement de turbocompresseur.
